(19) Europäisches Patentamt
European Patent Office
Office européen des brevets

(11) **EP 1 547 919 B1**

(12) **FASCICULE DE BREVET EUROPEEN**

(45) Date de publication et mention
de la délivrance du brevet:
**14.02.2007 Bulletin 2007/07**

(51) Int Cl.:
**B64C 27/00** *(2006.01)*

(21) Numéro de dépôt: **04029681.6**

(22) Date de dépôt: **15.12.2004**

(54) **Procédé et dispositif pour réduire par une dérive orientable les vibrations engendrées sur le fuselage d'un hélicoptère**

Verfahren und Vorrichtung zur Verminderung der Vibrationen eines Hubschrauberrumpfes, mittels eines steuerbaren Rudders

Process and device for reducing vibrations generated on a helicopter fuselage by means of a steerable rudder

(84) Etats contractants désignés:
**GB IT**

(30) Priorité: **23.12.2003 FR 0315299**

(43) Date de publication de la demande:
**29.06.2005 Bulletin 2005/26**

(73) Titulaire: **EUROCOPTER**
**13725 Marignane Cédex (FR)**

(72) Inventeur: **Eglin, Paul**
**13100 Aix en Provence (FR)**

(74) Mandataire: **Renaud-Goud, Thierry**
**GPI & Associes**
**EuroParc de Pichaury**
**1330, rue Guillibert de la Lauzière, Bât D1**
**13856 Aix-en-Provence Cédex 3 (FR)**

(56) Documents cités:
**FR-A- 2 678 578          FR-A- 2 737 181**
**FR-A- 2 747 099          US-A- 5 082 207**

# Description

La présente invention concerne un procédé et un dispositif pour réduire les vibrations engendrées sur la structure d'un hélicoptère par l'écoulement aérodynamique en provenance du rotor principal qui assure la sustentation et la propulsion de l'appareil et par l'écoulement aérodynamique le long du fuselage.

On sait que le rotor principal, en tournant, aspire l'air à l'amont et le refoule vers l'aval à la façon d'une hélice permettant ainsi le vol ascendant et le vol descendant de l'hélicoptère. En vol de translation, le rotor fonctionne à la fois comme une hélice et comme une aile. Fonctionnant en hélice, il accélère la masse d'air qui le traverse de manière à créer une veine d'air en mouvement, la pression et la vitesse de l'air variant tout au long de cette veine d'air. Fonctionnant en aile, le rotor provoque la déflexion de la veine d'air.

Il est d'usage de désigner par sillage, la veine d'air en aval du rotor principal, cette veine d'air étant partiellement perturbée par les principaux éléments d'entraînement en rotation du rotor principal et certains capots, voire par le fuselage de l'hélicoptère lui-même, en particulier en cas d'emport de charges externes ou lors de configurations de vol particulières. Toutefois, ce terme sera retenu par la suite par raison de commodité bien qu'il soit impropre puisqu'un sillage correspond en principe à une région, en aval d'un obstacle disposé dans un fluide en mouvement, dans laquelle le fluide est en repos relatif par rapport à l'obstacle.

On rappelle que le rotor principal est mis en rotation grâce au couple moteur appliqué à son arbre. A cet effet, la motorisation installée sur l'hélicoptère entraîne cet arbre par l'intermédiaire d'ensembles mécaniques appropriés. Il en résulte l'apparition, sur le fuselage, d'un couple égal et opposé qu'il est nécessaire de compenser au moyen d'un dispositif auxiliaire tel qu'un rotor arrière, entraîné en général à partir de la motorisation précitée.

Outre le fuselage et les rotors, chacun sait qu'un hélicoptère comprend également un ou des empennages sensiblement horizontaux et un ou des empennages sensiblement verticaux, ces derniers étant souvent dénommés par le vocable «dérive». Par raison de simplification, on retiendra, dans la description qui suit, le terme dérive pour désigner le ou les empennages verticaux ou analogues. Ces éléments, très généralement placés à l'arrière du fuselage, sont chargés d'assurer le contrôle, la stabilité et la possibilité de manoeuvre de l'hélicoptère autour de deux axes perpendiculaires. On notera que les empennages horizontaux et la dérive peuvent parfois constituer un seul ensemble en forme de T ou de croix +. De même, la dérive verticale peut être formée par une seule surface aérodynamique ou encore se présenter par exemple sous la forme de deux surfaces aérodynamiques formant un V, par exemple. Une autre solution consiste à disposer une dérive sensiblement verticale à l'extrémité extérieure d'un empennage à peu près horizontal. Toutefois, ces exemples ne sont pas limitatifs.

Généralement fixes et par conséquent disposés en arrière du fuselage (zone désignée par poutre de queue par l'homme du métier), la dérive et l'empennage d'un hélicoptère se trouvent dans une zone soumise au moins partiellement à l'écoulement aérodynamique ou sillage en provenance du rotor principal et du fuselage.

En pratique, le rotor principal se comporte comme un excitateur aérodynamique. Ainsi, le sillage est de nature turbulente. On rappelle que la turbulence correspond à des variations de pression, de vitesse et d'incidence du flux aérodynamique réparties sur une gamme assez large de fréquences relativement élevées.

Le sillage en arrière du rotor principal d'un hélicoptère est pulsé à la fréquence fondamentale égale au produit $b \times \Omega$ où $b$ est le nombre de pales du rotor principal et $\Omega$ la vitesse de rotation de ce rotor.

Cependant, des fréquences qui sont des harmoniques de $b \times \Omega$ peuvent éventuellement apparaître.

Dans ces conditions, la dérive et l'empennage sont soumis simultanément à cette excitation aérodynamique ce qui conduit directement à l'excitation des modes propres de la structure de l'hélicoptère. Ce phénomène est connu généralement sous la dénomination anglaise «tail shake».

Par ailleurs, dans certaines phases de vol (exemple du vol dérapé), il est possible que le phénomène de «tail shake» soit provoqué non pas par le sillage du rotor principal mais par le sillage du fuselage. En effet, un fuselage d'hélicoptère est souvent équipé d'emports externes (treuils, missiles, torpilles, réservoirs auxiliaires, ...) qui ont pour effet de dégrader (augmentation de la traînée et de la turbulence) le sillage du fuselage lui-même. La turbulence (principale cause du «tail shake») peut être limitée voire négligeable en phase de vol nominale (vol de croisière en atmosphère calme) mais peut par contre s'accentuer dans certaines phases de vol (vol dérapé, vol en atmosphère turbulente, ...).

Même si cette excitation aérodynamique est relativement faible, elle peut conduire à un niveau vibratoire désagréable au niveau du poste de pilotage et de la cabine des passagers et dommageable pour l'ensemble de la structure et des éléments mécaniques de l'hélicoptère.

Les vibrations ainsi engendrées peuvent être réparties sur les différents axes géométriques de la structure en fonction de la zone atteinte par le sillage. Si celui-ci affecte par exemple la dérive verticale, cela génère un effet à dominante latérale et notamment une excitation du premier mode propre de flexion latérale de la poutre de queue. Inversement, si le sillage atteint l'empennage horizontal, les vibrations seront à dominante verticale entraînant de ce fait une excitation du premier mode propre de flexion verticale de la poutre de queue.

Les différentes vibrations dues à ce premier mode de flexion latérale et/ou verticale de la structure ou encore un éventuel mode propre de torsion de l'hélicoptère présentent de nombreux inconvénients parmi lesquels :

- une réduction du confort de l'équipage et des passagers,

- une fatigue des matériaux et des équipements,

- des problèmes de fonctionnement des équipements embarqués tels que des systèmes d'armes lorsque l'hélicoptère en est muni.

Pour tenter d'apporter une solution à ce problème, les documents FR 2 737 181 et US 5816533 divulguent un procédé et un dispositif générant un effet qui s'oppose aux vibrations par une variation alternative de pas des pales du rotor de queue de l'hélicoptère.

Toutefois, il s'avère que la solution selon ces brevets FR 2 737 181 et US 5816533 présente un premier inconvénient lié au fait que l'excitation aérodynamique entraîne l'excitation des modes propres de la structure du fuselage, le pilotage des pales du rotor arrière ayant pour fonction de réduire les vibrations qui en résultent en certains points particuliers de l'hélicoptère. Toutefois, cette action tend à déplacer les noeuds et les ventres de vibrations le long de la structure sans pour autant supprimer l'excitation des modes propres de ladite structure.

De la sorte, la dérive et l'empennage horizontal, en particulier, subissent les déflexions de structure au niveau de leurs attaches selon la réponse de la structure aux excitations.

Un second inconvénient du système décrit dans ces brevets concerne une augmentation du niveau de bruit émis en raison des variations des paramètres caractéristiques (vitesse, pression, ...) de l'écoulement aérodynamique à travers le rotor arrière générées par les variations d'incidence de ses pales. Ces effets sont préjudiciables pour l'environnement et posent de sérieux problèmes en matière de réglementation.

On notera encore, à titre d'exemple, un autre inconvénient entraîné par les variations d'incidence des pales d'un rotor arrière pour s'opposer aux vibrations précitées. Ces variations d'incidence des pales dudit rotor arrière génèrent, en effet, des efforts et des moments alternés qui réduisent la durée de vie de l'ensemble des pièces constitutives de ce rotor et de ses moyens d'entraînement en rotation.

La présente invention a pour objet de remédier à ces inconvénients. Elle concerne un procédé permettant de réduire, voire de supprimer, de façon simple et efficace, les vibrations engendrées sur la structure d'un hélicoptère, par l'écoulement aérodynamique ou sillage à travers le rotor principal de sustentation et d'avance dudit hélicoptère, et/ou par l'écoulement aérodynamique le long du fuselage, ledit hélicoptère comportant au moins une dérive en partie au moins orientable, un fuselage, un rotor principal de sustentation et d'avance et, le cas échéant, un rotor de queue à pales dont le pas est variable.

A cet effet, ledit procédé est remarquable selon l'invention en ce que :

a) on mesure les vibrations engendrées en au moins un emplacement de la structure de l'hélicoptère,
b) à partir desdites mesures, on détermine une variation de l'incidence d'au moins une partie de la dérive, susceptible de générer une force d'opposition auxdites vibrations,
c) on applique la variation de l'incidence ainsi déterminée à un système de commande en incidence d'au moins une partie de ladite dérive, sans variation alternative du pas des pales du rotor de queue.

Ainsi, grâce à la génération de ladite force d'opposition, on est en mesure de réduire de façon simple et significative lesdites vibrations, dont on a indiqué précédemment les inconvénients.

On notera d'ailleurs que le procédé, selon l'invention, est d'autant plus performant qu'il permet l'annulation de l'effet de l'excitation aérodynamique à la source, c'est-à-dire au niveau de la dérive elle-même du fait de son pilotage en incidence. Par conséquent, il ne peut plus se produire d'excitation des modes propres du fuselage du simple fait de l'interférence du sillage turbulent et pulsé du rotor principal et du sillage du fuselage.

De plus, on notera que la fréquence desdites vibrations étant généralement située au voisinage d'une plage allant de 5 à 6 Hertz - ou dans cette plage - , la fréquence du système de commande de variation d'incidence de la dérive peut atteindre 20 Hertz par exemple et devient alors beaucoup plus élevée que la fréquence de manoeuvre dudit rotor arrière par le pilote (généralement inférieure à 1 Hertz) pour le pilotage en lacet, de sorte que la mise en oeuvre du procédé conforme à l'invention n'engendre aucune conséquence sur le pilotage en lacet de l'hélicoptère.

Afin de ne pas commander en continu et de ne prendre en compte que les vibrations les plus importantes et les plus dommageables, avantageusement, on filtre en fréquence les vibrations mesurées et on tient compte, à l'étape b) du procédé conforme à l'invention, uniquement des vibrations filtrées.

A cet effet, on utilise de préférence un filtre passe-bas dont la fréquence de coupure est située dans une plage allant de 20 à 30 Hz environ.

De plus, pour des raisons de stabilité et de sécurité, l'amplitude de la force d'opposition est limitée de façon avantageuse à une valeur prédéfinie.

En outre, pour des raisons de manoeuvrabilité, ainsi que pour détecter une éventuelle dégradation du balourd du rotor principal de l'hélicoptère, la mise en oeuvre du procédé conforme à l'invention pour la réduction des vibrations peut être supprimée lorsque ledit hélicoptère se trouve au sol.

De même, ladite mise en oeuvre peut être désactivée lorsque l'hélicoptère est soumis à des conditions de vol particulières.

Lorsque le procédé conforme à l'invention est appliqué à un hélicoptère dont une dérive est sensiblement parallèle au plan de symétrie contenant l'axe longitudinal et l'axe vertical de l'hélicoptère, de façon avantageuse :

- à l'étape a), on mesure les vibrations latérales engendrées en au moins un emplacement de la structure dudit hélicoptère ; et

- à l'étape b), on génère une force latérale d'opposition auxdites vibrations latérales.

Dans ce cas, la dérive peut présenter l'une des caractéristiques remarquables suivantes :

- elle est peut être unique et située soit sensiblement dans le plan de symétrie de l'hélicoptère, soit sensiblement verticale à l'extrémité externe d'un empennage sensiblement horizontal,

- elle est peut être double selon notamment l'une des configurations suivantes :

   • en forme de V à l'extrémité arrière de la poutre de queue,

   • un empennage sensiblement horizontal étant composé de deux surfaces aérodynamiques disposées de chaque côté de la poutre de queue, chacune des deux extrémités externes de chacune des deux surfaces aérodynamiques est munie d'une dérive sensiblement verticale.

Dans le cas d'une double dérive, l'hélicoptère peut comporter également une dérive sensiblement verticale et dans le plan de symétrie précédemment cité.

Lorsque une dérive au moins est inclinée au moins partiellement par rapport audit plan de symétrie, de façon avantageuse :

- à l'étape a), on mesure les vibrations latérales et les vibrations verticales engendrées en au moins un emplacement de la structure dudit hélicoptère ; et

- à l'étape b), on génère une force d'opposition présentant une composante latérale et une composante verticale s'opposant auxdites vibrations latérales et auxdites vibrations verticales.

Dans ce cas, la dérive présente au moins l'une des caractéristiques remarquables suivantes :

- elle est unique, à l'arrière de la poutre de queue,

- elle est double et en forme de V, chacune des branches du V ayant une inclinaison particulière par rapport audit plan de symétrie de l'hélicoptère, cette double dérive pouvant encore être complétée par une dérive sensiblement verticale et dans ledit plan de symétrie.

De plus, pour minimiser les éventuelles vibrations verticales additionnelles, on génère à l'aide d'au moins un empennage sensiblement horizontal et orientable en incidence une force verticale d'opposition auxdites vibrations verticales. Par conséquent, cet empennage sensiblement horizontal a pour fonction de contrer les effets des vibrations verticales soit totalement si aucune dérive n'est inclinée, soit partiellement lorsqu'une réduction desdites vibrations verticales est déjà obtenue au moyen d'au moins une dérive inclinée.

Cet empennage sensiblement horizontal est remarquable en ce qu'il comporte au moins l'une des caractéristiques suivantes :

- il est unique, d'un côté de la poutre de queue ou d'un côté d'une dérive,

- il est double, chaque partie étant située de chaque côté soit d'une dérive, soit de la poutre de queue.

En outre, avantageusement, le procédé peut être mis en oeuvre pour actionner en incidence une seule partie d'une dérive ou d'un empennage, c'est-à-dire un volet disposé au bord de fuite de ladite dérive ou dudit empennage, l'envergure dudit volet pouvant être inférieure à l'envergure de ladite dérive ou dudit empennage. Dans ce cas, la partie amont de ladite dérive ou dudit empennage est fixe.

On notera encore que la mesure desdites vibrations latérales et/ou horizontales peut être faite précisément sur chaque dérive et/ou chaque empennage sensiblement horizontal de façon à mouvoir chacune de ces surfaces aérodynamiques pour éviter toute excitation des modes propres du fuselage et de la poutre de queue sous l'effet de l'excitation par le sillage.

La présente invention concerne également un dispositif pour réduire, voire supprimer, les vibrations engendrées sur la structure d'un hélicoptère, par l'écoulement aérodynamique ou sillage à travers le rotor principal d'avance et de sustentation dudit hélicoptère, et/ou par le sillage du fuselage, ledit hélicoptère comportant au moins une dérive orientable à l'arrière du fuselage dont l'incidence est commandée par un système de commande.

Selon l'invention, ledit dispositif est remarquable en ce qu'il comporte :

- au moins un capteur susceptible de mesurer les vibrations engendrées sur la structure dudit hélicoptère ; et

- un moyen de calcul agencé (programmé) pour :

   • déterminer à partir desdites mesures une variation de l'incidence d'une dérive susceptible de générer une force d'opposition auxdites vibrations ; et

   • transmettre la variation de l'incidence ainsi déterminée audit système de commande en incidence de ladite dérive, sans commander une variation alternative du pas des pales du rotor de queue.

Dans un mode de réalisation particulier, ledit dispositif comporte avantageusement en supplément au moins un empennage orientable sensiblement horizontal dont la variation en incidence est commandée par ledit moyen de calcul pour générer une force d'opposition verticale auxdites vibrations verticales additionnelles.

Ledit capteur peut notamment être l'une des variantes suivantes :

- un accéléromètre,

- un gyromètre,

- une jauge de contrainte,

- une sonde d'incidence,

- une sonde de dérapage,

- un microphone pour évaluer l'environnement aérodynamique de la dérive et/ou de l'empennage sensiblement horizontal.

Avantageusement, ledit capteur sera disposé sur la partie fixe de la dérive orientable et éventuellement sur la partie fixe de l'empennage orientable.

L'invention peut être appliquée à un hélicoptère dénué de rotor (anti-couple) de queue.

Les figures annexées feront bien comprendre comment l'invention peut être réalisée. Sur ces figures, des références identiques désignent des éléments semblables.

La figure 1 montre de façon schématique un dispositif conforme à l'invention monté sur un hélicoptère.

La figure 2 illustre schématiquement la veine d'air formée par la rotation du rotor principal et par le fuselage d'un hélicoptère, qui est génératrice de vibrations.

La figure 3 illustre une force d'opposition aux vibrations, générée sur un hélicoptère dont la dérive est parallèle au plan de symétrie dudit hélicoptère, à partir d'une coupe transversale schématique suivant la ligne III-III de la figure 1.

La figure 4 illustre une force d'opposition aux vibrations, générée sur un hélicoptère dont la dérive est inclinée par rapport au plan de symétrie dudit hélicoptère.

La figure 5 illustre de façon schématique un dispositif conforme à l'invention mettant en oeuvre des volets d'une dérive et d'un empennage sensiblement horizontal.

La figure 6 illustre l'utilisation de volets selon l'invention disposés sur deux dérives latérales, chacune de ces dérives étant fixée à l'extrémité externe de chacun de deux empennages sensiblement horizontaux et symétriques par rapport au plan de symétrie de l'hélicoptère.

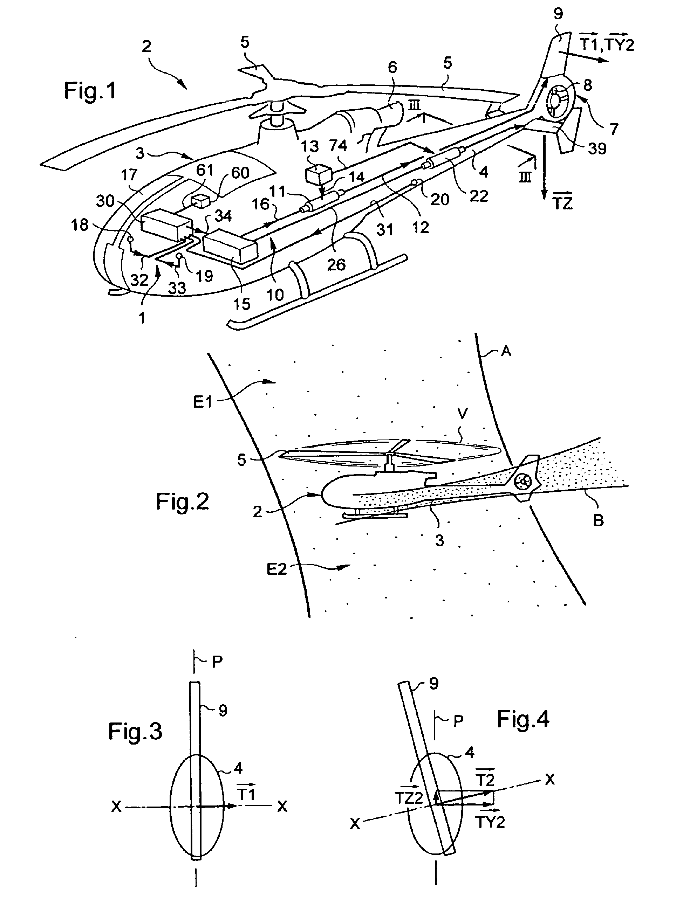

Le dispositif 1 conforme à l'invention et représenté schématiquement sur la figure 1 est destiné à réduire les vibrations connues sous le nom de «tail shake», appellation anglaise usuelle dans le domaine aéronautique, qui sont engendrées sur la structure d'un hélicoptère 2, tel que précisé ci-dessous.

Comme on peut le voir sur la figure 1, ledit hélicoptère 2 comporte :

- un fuselage 3 prolongé vers l'arrière par une poutre de queue 4,

- un rotor principal 5 de sustentation et d'avance entraîné au moyen d'une énergie motrice fournie par un moteur 6,

- un rotor arrière 7 muni de façon connue de pales 8 et destiné à compenser le couple en lacet dudit rotor principal 5,

- une dérive 9 sensiblement verticale.

Ladite dérive 9, utilisée pour assurer la stabilité en lacet dudit hélicoptère 2, peut être orientée en incidence au moyen d'un système de commande 10 qui comporte :

- un vérin d'actionnement 11 ou analogue (relié par une liaison 12, représentée schématiquement, à ladite dérive 9) alimenté en énergie par une source d'énergie 13 par l'intermédiaire d'une liaison 14 ; et

- un dispositif de commande 15 qui fournit les ordres de commande audit vérin d'actionnement 11 par l'intermédiaire d'une liaison 16.

On sait que, pour la mise en sustentation et pour l'avance de l'hélicoptère 2, le rotor principal 5 aspire de l'air de l'espace E1 situé au-dessus de lui et le refoule vers l'espace E2 situé au-dessous, en l'accélérant. Il crée ainsi une veine d'air A en mouvement, de pression et de vitesse variables, dont le diamètre au niveau de l'hélicoptère 2 est sensiblement égal au diamètre de la voilure V, tel que représenté sur la figure 2. Au contact de l'hélicoptère 2, cet écoulement aérodynamique ou sillage (A) et l'écoulement aérodynamique (B) le long du fuselage 3, provoque des vibrations sur la structure 17 dudit hélicoptère 2.

Ces vibrations, surtout latérales mais non exclusivement, sont dues principalement à l'excitation par l'écoulement aérodynamique des modes propres de la structure 17 de l'hélicoptère 2 et notamment du premier mode de flexion latérale de la poutre de queue 4 de l'hélicoptère 2.

Les vibrations dues à ce premier mode de flexion latérale présentent généralement une fréquence de quelques hertz et sont particulièrement nuisibles.

Les différentes vibrations ainsi engendrées présentent notamment des inconvénients pour :

- le confort de l'équipage et des passagers,

- la fatigue des pièces et des équipements, et

- le fonctionnement de systèmes d'armes non représentés lorsque l'hélicoptère 2 en est équipé.

Le dispositif 1 conforme à l'invention est destiné à réduire lesdites vibrations latérales pour remédier à ces inconvénients.

A cet effet, ledit dispositif 1 comporte :

- des capteurs 18, 19, 20 de type connu, par exemple des accéléromètres, des gyromètres, des jauges de contraintes, des sondes d'incidences, des sondes de dérapage, des microphones, montés à différents emplacements de la structure 17 de l'hélicoptère 2 et susceptibles de mesurer les vibrations engendrées à ces emplacements sur ladite structure 17 ; et

- un moyen de calcul 30 relié par l'intermédiaire de liaisons 31, 32, 33 respectivement auxdits capteurs 18, 19, 20 et susceptible :

  • de déterminer à partir desdites mesures de vibrations une variation de l'incidence de ladite dérive 9 susceptible de générer une force d'opposition $\overrightarrow{T1}$, auxdites vibrations ; et

  • d'appliquer la variation de l'incidence ainsi déterminée au dispositif de commande 15 dudit système de commande 10 de l'incidence de ladite dérive 9, par l'intermédiaire d'une liaison 34.

Ainsi, les vibrations existantes sont réduites par l'action de la force d'opposition $\overrightarrow{T1}$ générée par la commande de l'incidence de la dérive 9.

Comme la fréquence de ladite force d'opposition $\overrightarrow{T1}$ est au moins égale à la fréquence des vibrations considérées, à savoir 5 à 6 Hz comme indiqué précédemment, le fonctionnement du dispositif 1 conforme à l'invention n'engendre aucune incidence sur le pilotage en lacet de l'hélicoptère 2, ledit pilotage étant en effet commandé suivant des fréquences beaucoup plus faibles, généralement inférieures à 1 HZ.

En outre, le dispositif 1 conforme à l'invention permet de limiter la résonance d'un ou de plusieurs modes de la structure, situés à proximité d'un harmonique de la fréquence de rotation du rotor principal, pour lesquels la déformation de la poutre de queue de l'hélicoptère 2 est importante.

De plus, il importe de noter qu'en disposant au moins l'un des capteurs 18, 19, 20 sur la dérive elle-même, l'excitation de la poutre de queue 4 peut être neutralisée puisque l'effet correctif intervient au niveau même de la dérive 9, laquelle est soumise à l'excitation produite par le sillage. De la sorte, l'ensemble de la structure de l'hélicoptère n'est pas sollicité par les perturbations de nature aérodynamique exercées sur ladite dérive 9.

Comme on peut le voir plus précisément sur la figure 3, lorsque le plan de la dérive 9 est parallèle au plan de symétrie P de l'hélicoptère, ladite force d'opposition $\overrightarrow{T1}$ générée suivant l'axe X.X, perpendiculaire au plan P, est latérale et susceptible d'éviter les vibrations latérales, qui sont essentielles dans le phénomène physique de type «tail shake».

Dans ce cas, lorsqu'en plus desdites vibrations latérales, l'hélicoptère 2 est soumis à des vibrations verticales, on peut générer selon l'invention, à l'aide d'un empennage sensiblement horizontal 39 à incidence commandable (représenté sur la figure 1) par ledit moyen de calcul 30, une force d'opposition verticale $\overrightarrow{T2}$ auxdites vibrations verticales. Dans ces conditions, une variation de l'incidence de l'empennage 39 est appliquée au dispositif de commande 15 qui fournit, par l'intermédiaire d'une liaison 26, les ordres de commande à un vérin d'actionnement 22 alimenté en énergie par une source d'énergie 13 par l'intermédiaire d'une liaison 74.

Bien entendu, la présente invention s'applique également à un hélicoptère 2 dont l'une au moins des dérives est inclinée par rapport au plan de symétrie P de l'hélicoptère, tel que représenté sur la figure 4.

A cet effet, selon l'invention, on détermine une variation de l'incidence de la dérive 9 permettant de générer une force d'opposition $\overrightarrow{T2}$, présentant une composante latérale $\overrightarrow{TY2}$ et une composante $\overrightarrow{TY2}$ telles que :

- ladite composante latérale $\overrightarrow{TY2}$ de la force

$\overrightarrow{T2}$ s'oppose efficacement auxdites vibrations latérales ; et

- ladite composante verticale $\overrightarrow{TZ2}$ de la force

$\overrightarrow{T2}$ s'oppose efficacement auxdites vibrations verticales.

Par ailleurs, ledit moyen de calcul 30 peut incorporer un moyen de filtrage destiné à filtrer en fréquence les vibrations mesurées, pour ne retenir que celles qui sont inférieures à une fréquence déterminée, qui est de l'ordre de 20 Hz à 30Hz. Ce mode de réalisation évite notamment de commander quasiment en continu ladite dérive et/ou ledit empennage, en ne prenant pas en compte certaines vibrations négligeables.

Alternativement, un filtre passe-bande peut être utilisé.

Ledit moyen de calcul 30 peut en outre être relié, dans un mode de réalisation particulièrement avantageux, à un moyen non représenté qui lui indique lorsque l'hélicoptère 2 se trouve au sol de sorte que ledit moyen de calcul 30 ne transmet alors aucun ordre de commande au dispositif de commande 15, et ceci tant que ledit hélicoptère 2 reste au sol. Le dispositif 1 conforme à l'invention est donc rendu inactif au sol, ce qui permet notamment de détecter une éventuelle dégradation du balourd de l'hélicoptère, une telle détection étant impossible lors du fonctionnement du dispositif 1.

Par ailleurs, dans un autre mode de réalisation particulier non représenté, on peut également prévoir que le dispositif 1 conforme à l'invention soit rendu inactif en vol, lors de l'apparition de conditions de vol particulières.

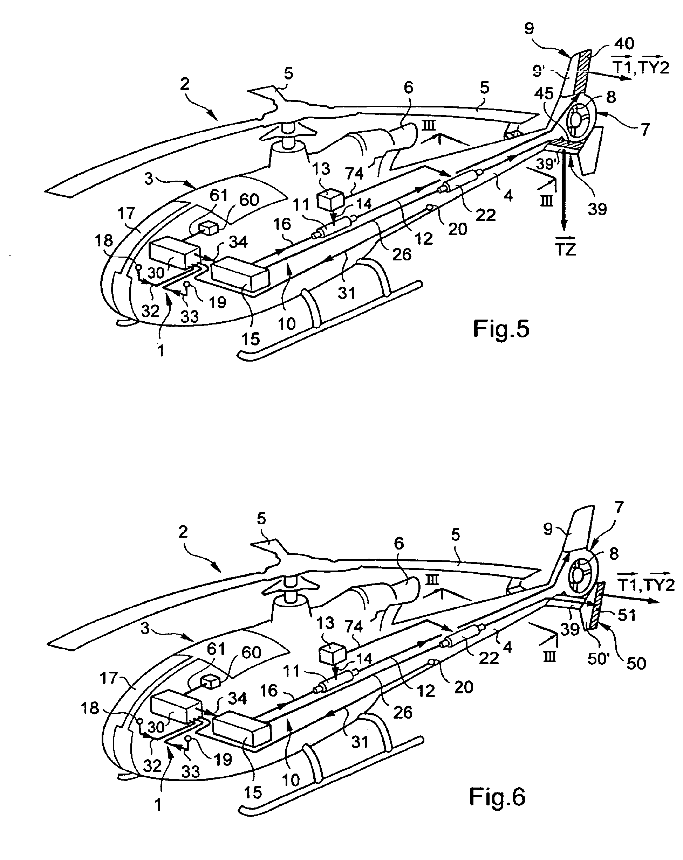

Bien évidemment et comme schématisé sur la figure 5, une variation de l'incidence peut être appliquée à une dérive orientable réalisée par un volet de bord de fuite 40 équipant au moins une dérive 9 verticale ou inclinée, et éventuellement à un empennage orientable réalisé par un volet 45 équipant au moins un empennage sensiblement horizontal 39, la partie amont 9' de la dérive 9 et la partie amont 39' de l'empennage 39 restant fixes. Ces volets sont représentés sous la forme de hachures sur la figure 5. Dans ce cas, l'envergure du volet peut être inférieure à celle de la dérive ou de l'empennage.

On comprendra également que l'on peut mettre en oeuvre l'invention selon des variantes telles que les suivantes, par exemple :

- mise en incidence commandée d'au moins une dérive 9 complète et d'un volet 45 d'au moins un empennage 39,

- mise en incidence commandée d'au moins un empennage complet 39 et d'un volet 40 d'au moins une dérive 9,

- mise en incidence commandée d'au moins une dérive 9 complète et d'au moins un empennage complet 39,

- mise en incidence commandée d'un volet 40 d'au moins une dérive 9 et d'un volet 45 d'au moins un empennage 39.

Par ailleurs, on peut commander, par exemple la mise en incidence complète de dérives 50 disposées à chaque extrémité d'un empennage 39 ou encore la mise en incidence de volets 51 équipant lesdites dérives 50 dont la partie amont 51' est alors fixe, comme le montre la figure 6.

Bien sûr, ces dérives 50 peuvent encore prendre la forme d'un V (non représenté) disposé en lieu et place de la dérive 9 ou encore en complément à cette dérive 9.

De même, on comprendra que la variation de l'incidence d'une dérive 9, 40, 50, 51, et l'éventuelle variation de l'incidence de l'empennage sensiblement horizontal 39, 45, seront adaptées à chaque configuration de dérive(s)-empennage(s) et à chaque configuration de vol.

A cet effet, le moyen de calcul 30 exploite les informations relatives à chaque configuration de vol à savoir, par exemple, les vitesses verticale et horizontale, les attitudes et positions de l'hélicoptère. Ces informations sont fournies par des capteurs 60 de paramètres de configurations (ou phases) de vol au moyen de calcul 30, ces capteurs 60 étant reliés par une liaison 61 audit moyen de calcul 30.

Dans ces conditions, ledit capteur 18, 19, 20 peut être avantageusement fixé sur ladite dérive en partie au moins orientable 9, 40, 50, 51 et sur l'éventuel empennage orientable 39, 45, et de préférence sur la partie fixe de ladite dérive et dudit empennage.

Selon un mode préféré de réalisation, on mesure la vitesse (notée IAS) de déplacement de l'hélicoptère par rapport à l'air à l'aide d'un capteur de vitesse air ; et on ajuste le gain de la commande de variation d'incidence de la dérive - et le cas échéant de l'empennage horizontal -, en fonction de la vitesse mesurée.

Selon un mode particulier de réalisation, lorsque la vitesse air dépasse une valeur de seuil prédeterminée, ledit gain G est proportionnel à l'inverse du carré de la vitesse air, notamment selon la formule suivante :

$$G = \frac{k}{IAS^2} * (M + \varphi),$$ où $k$ est une valeur constante, $M$ est la mesure de vibration (filtrée), et $\varphi$ est un déphasage choisi ou adapté en permanence pour minimiser l'amplitude des vibrations mesurées.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé pour réduire les vibrations engendrées sur la structure (17) d'un hélicoptère (2), l'hélicoptère comportant au moins une dérive orientable (9, 40, 50, 51), un fuselage (3), un rotor principal (5) de sustentation et d'avance, le cas échéant un rotor de queue (7) à pales (8) dont le pas est variable, les vibrations étant engendrées par l'écoulement aérodynamique (A) à travers le rotor principal (5) et par l'écoulement aérodynamique (B) le long du fuselage (3),
   dans lequel :

   a) on mesure les vibrations engendrées en au moins un emplacement de la structure (17) dudit hélicoptère (2) ;
   **caractérisé en ce que**
   b) à partir desdites mesures, on détermine une variation de l'incidence d'au moins une partie de ladite dérive (9, 40, 50, 51) susceptible de générer une force d'opposition $(\overrightarrow{T1}, \overrightarrow{T2})$ auxdites vibrations ; et
   c) on applique la variation de l'incidence ainsi déterminée à un système de commande en incidence (10) d'au moins une partie de ladite dérive (9, 40, 50, 51),

   sans variation alternative du pas des pales du rotor de queue.

2. Procédé selon la revendication 1,
   **caractérisé en ce qu'**on filtre en fréquence les vibrations mesurées et on tient compte à l'étape b) uniquement desdites vibrations filtrées.

3. Procédé selon l'une quelconque des revendications 1 ou 2,
   **caractérisé en ce que** l'amplitude de ladite force d'opposition $(\overrightarrow{T1}, \overrightarrow{T2})$ est limitée à une valeur prédéfinie.

4. Procédé selon l'une quelconque des revendications précédentes,
   **caractérisé en ce que** sa mise en oeuvre pour la réduction des vibrations est supprimée lorsque ledit hélicoptère (2) se trouve au sol.

5. Procédé selon l'une quelconque des revendications précédentes,
   **caractérisé en ce que** sa mise en oeuvre pour la réduction des vibrations est supprimée lorsque ledit hélicoptère (2) est soumis à des conditions de vol particulières.

6. Procédé selon l'une quelconque des revendications précédentes, appliqué à un hélicoptère (2) dont la dérive (9, 40, 51) est parallèle au plan de symétrie (P) dudit hélicoptère,
   **caractérisé en ce que :**

   - à l'étape a), on mesure les vibrations latérales engendrées en au moins un emplacement de la structure (17) dudit hélicoptère (2) ; et

   - à l'étape b), on engendre une force latérale d'opposition $(\overrightarrow{T1})$ auxdites vibrations latérales.

7. Procédé selon l'une quelconque des revendications 1 à 5, appliqué à un hélicoptère (2) dont la dérive (9, 40, 50, 51) est inclinée par rapport au plan de symétrie (P) de l'hélicoptère,
   **caractérisé en ce que :**

   - à l'étape a), on mesure les vibrations latérales et les vibrations verticales engendrées en au moins un emplacement de la structure (17) dudit hélicoptère (2) ; et

   - à l'étape b), on génère une force d'opposition $(\overrightarrow{T2})$ présentant une composante latérale $(\overrightarrow{TY2})$ et une composante verticale $(\overrightarrow{TZ2})$ s'opposant respectivement auxdites vibrations latérales et auxdites vibrations verticales.

8. Procédé selon l'une quelconque des revendications 1 à 7,
   **caractérisé en ce que**, pour réduire les vibrations verticales additionnelles, on génère de plus, à l'aide d'au moins une partie d'un empennage (39, 45) sensiblement horizontal et orientable en incidence une force verticale d'opposition $\overrightarrow{TZ}$ auxdites vibrations verticales additionnelles.

**9.** Procédé selon l'une quelconque des revendications 1 à 8, **caractérisé en ce qu**'il est mis en oeuvre sur un hélicoptère (2) dont la dérive orientable (40, 51) est un volet de bord de fuite articulé en rotation respectivement par rapport à une dérive amont fixe (9', 50').

**10.** Procédé selon l'une quelconque des revendications 1 à 9, **caractérisé en ce qu**'il est mis en oeuvre sur un hélicoptère (2) dont l'empennage (45) orientable et sensiblement horizontal est un volet de bord de fuite articulé en rotation par rapport à un empennage amont fixe (39').

**11.** Dispositif pour réduire les vibrations engendrées sur la structure (17) d'un hélicoptère (2), l'hélicoptère comportant une dérive (9, 40, 51) dont l'incidence d'au moins une partie est commandée par un système de commande (10), un fuselage (3), un rotor principal (5) de sustentation et d'avance, et le cas échéant un rotor de queue (7) à pales (8) dont le pas est variable, les vibrations étant engendrées par l'écoulement aérodynamique (A) à travers le rotor principal (5) et par l'écoulement aérodynamique (B) le long du fuselage (3),
le dispositif comportant au moins un capteur (18, 19, 20) susceptible de mesurer les vibrations engendrées sur la structure (17) dudit hélicoptère (2) ; **caractérisé en ce qu**'il comporte un moyen de calcul (30) agencé (programmé) pour :

• déterminer à partir desdites mesures une variation de l'incidence d'au moins une partie de ladite dérive (9, 40, 50, 51) susceptible de générer une force d'opposition $(\vec{T1}, \vec{T2})$ auxdites vibrations ; et
• transmettre la variation en incidence ainsi déterminée audit système de commande (10) en incidence de ladite dérive (9, 40, 50, 51),

sans commander une variation alternative du pas des pales du rotor de queue.

**12.** Dispositif selon la revendication 11, **caractérisé en ce que** pour réduire les vibrations verticales additionnelles, le moyen de calcul (30) applique en plus une variation de l'incidence au système de commande (10) pour commander en incidence au moins une partie d'un empennage (39, 45) sensiblement horizontal.

**13.** Dispositif selon la revendication 11 ou 12, **caractérisé en ce que** ledit capteur (18, 19, 20) est un accéléromètre.

**14.** Dispositif selon la revendication 11 ou 12, **caractérisé en ce que** ledit capteur (18, 19, 20) est un gyromètre.

**15.** Dispositif selon la revendication 11 ou 12, **caractérisé en ce que** ledit capteur (18, 19, 20) est une jauge de contrainte.

**16.** Dispositif selon l'une quelconque des revendications 11 à 15, **caractérisé en ce que** il comporte en outre un moyen de mesure de la vitesse air (IAS), et **en ce que** ledit moyen de calcul est agencé pour déterminer ladite variation d'incidence en fonction de ladite vitesse air.

**17.** Dispositif selon la revendication 16, **caractérisé en ce que** ledit moyen de calcul est agencé pour calculer la variation d'incidence en fonction de l'inverse du carré de la vitesse-air.

**18.** Dispositif selon la revendication 11, **caractérisé en ce que** ledit capteur (18, 19, 20) est un microphone, une sonde d'incidence, ou une sonde de dérapage.

**19.** Dispositif selon l'une quelconque des revendications 11 à 18, **caractérisé en ce qu**'au moins un capteur (18, 19, 20) est fixé sur une partie fixe de ladite dérive (9, 40, 50, 51).

**20.** Dispositif selon l'une quelconque des revendications 11 à 18, **caractérisé en ce qu**'au moins un capteur (18, 19, 20) est fixé sur une partie fixe dudit empennage (39, 45).

**21.** Dispositif selon l'une quelconque des revendications 11 à 20, **caractérisé en ce qu**'il est mis en oeuvre pour commander en incidence au moins une dérive (40, 51) laquelle est un volet de bord de fuite articulé en rotation respectivement par rapport à une dérive amont fixe (9', 50').

**22.** Dispositif selon l'une quelconque des revendications 12 à 21, **caractérisé en ce qu**'il est mis en oeuvre pour commander de plus en incidence au moins un empennage sensiblement horizontal (45) lequel est un volet de bord de fuite articulé en rotation par rapport à un empennage amont fixe (39').

**23.** Dispositif selon l'une quelconque des revendications 11 à 22, qui comporte en outre un filtre passe-bas dont la fréquence de coupure est de l'ordre de 20 Hz à 30 Hz, qui est agencé pour filtrer lesdites mesures de vibrations.

**24.** Dispositif selon l'une quelconque des revendications 11 à 23, dans lequel le moyen de calcul est agencé pour choisir ou adapter le déphasage entre les vibrations mesurées et le gain de la commande de variation d'incidence de la dérive.

## Claims

**1.** A method of reducing the vibrations caused to the structure (17) of a helicopter (2), the helicopter having at least one orientable tail fin (9, 40, 50, 51), a fuselage (3), a main rotor (5) for thrust and lift, where appropriate a tail rotor (7) with blades (8) whereof the pitch is variable, the vibrations being caused by the aerodynamic flow (A) through the main rotor (5) and the aerodynamic flow (B) along the fuselage (3), in which:

   a) the vibrations caused in at least one location on the structure (17) of the said helicopter (2) are measured;
   **characterised in that**
   b) from the said measurements, a variation in the incidence of at least a part of the said tail fin (9, 40, 50, 51) which is capable of generating a

   force $(\overrightarrow{T1}, \overrightarrow{T2})$ in opposition to the said vibrations is determined; and
   c) the variation in incidence which is determined in this way is applied to a system (10) for controlling the incidence of at least a part of the said tail fin (9, 40, 50, 51)

without an alternative variation in the pitch of the tail rotor blades.

**2.** A method according to Claim 1, **characterised in that** the vibrations measured are filtered by frequency and in step b) only the said filtered vibrations are taken into account.

**3.** A method according to either of Claims 1 or 2, **characterised in that** the amplitude of the said opposing

   force $(\overrightarrow{T1}, \overrightarrow{T2})$ is limited to a predefined value.

**4.** A method according to any one of the preceding claims, **characterised in that** implementation thereof for the purpose of reducing vibrations is not activated when the said helicopter (2) is on the ground.

**5.** A method according to any one of the preceding claims, **characterised in that** implementation thereof for the purpose of reducing vibrations is not activated when the said helicopter (2) is subject to specific flight conditions.

**6.** A method according to any one of the preceding claims, applied to a helicopter (2) whereof the tail fin (9, 40, 51) is parallel to the plane of symmetry (P) of the said helicopter,
**characterised in that**:

   - in step a), the lateral vibrations caused in at least one location on the structure (17) of the said helicopter (2) are measured; and

   - in step b), a lateral force $(\overrightarrow{T1})$ in opposition to the said lateral vibrations is brought about.

**7.** A method according to any one of Claims 1 to 5, applied to a helicopter (2) whereof the tail fin (9, 40, 50, 51) is inclined in relation to the plane of symmetry (P) of the helicopter,
**characterised in that**:

   - in step a), the lateral vibrations and the vertical vibrations caused in at least one location on the structure (17) of the said helicopter (2) are measured; and

   - in step b), a force $(\overrightarrow{T2})$ having a lateral component $(\overrightarrow{TY2})$ and a vertical component $(\overrightarrow{TZ2})$ which are respectively in opposition to the said lateral and vertical vibrations is generated.

**8.** A method according to any one of Claims 1 to 7, **characterised in that** in order to reduce additional vertical vibrations, with the aid of at least a part of a substantially horizontal tail assembly (39, 45) whereof the incidence is orientable, a vertical force $\overrightarrow{TZ}$ in opposition to the said additional vertical vibrations is further generated.

**9.** A method according to any one of Claims 1 to 8, **characterised in that** it is implemented in a helicopter (2) whereof the orientable tail fin (40, 51) is a trailing edge flap which is articulated to rotate respectively in relation to a fixed upstream tail fin (9', 50').

**10.** A method according to any one of Claims 1 to 9, **characterised in that** it is implemented in a helicopter (2) whereof the orientable and substantially horizontal tail assembly (45) is a trailing edge flap which is articulated to rotate in relation to a fixed upstream tail assembly (39').

11. A device for reducing the vibrations caused to the structure (17) of a helicopter (2), the helicopter having a tail fin (9, 40, 51) whereof the incidence of at least a part is controlled by a control system (10), a fuselage (3), a main rotor (5) for thrust and lift, and where appropriate a tail rotor (7) with blades (8) whereof the pitch is variable, the vibrations being caused by the aerodynamic flow (A) through the main rotor (5) and the aerodynamic flow (B) along the fuselage (3), the device having at least one sensor (18, 19, 20) capable of measuring the vibrations caused to the structure (17) of the said helicopter (2), **characterised in that** it has a calculation means (30) arranged (programmed) to:

> • determine from the said measurements a variation in the incidence of at least a part of the said tail fin (9, 40, 50, 51) which is capable of generating a force $(\overrightarrow{T1}, \overrightarrow{T2})$ in opposition to the said vibrations; and
> • transmit the variation in incidence which is determined in this way to the said

system (10) for controlling the incidence of the said tail fin (9, 40, 50, 51) without controlling an alternative variation in the pitch of the tail rotor blades.

12. A device according to Claim 11, **characterised in that**, in order to reduce the additional vertical vibrations, the calculation means (30) further applies a variation in the incidence to the control system (10) in order to control the incidence of at least a part of a substantially horizontal tail assembly (39, 45).

13. A device according to Claim 11 or 12, **characterised in that** the said sensor (18, 19, 20) is an accelerometer.

14. A device according to Claim 11 or 12, **characterised in that** the said sensor (18, 19, 20) is a gyrometer.

15. A device according to Claim 11 or 12, **characterised in that** the said sensor (18, 19, 20) is a stress gauge.

16. A device according to any one of Claims 11 to 15, **characterised in that** it further has a means of measuring the air speed (IAS), and **in that** the said calculation means is arranged to determine the said variation in incidence as a function of the said air speed.

17. A device according to Claim 16, **characterised in that** the said calculation means is arranged to calculate the variation in incidence as a function of the inverse square of the air speed.

18. A device according to Claim 11, **characterised in that** the said sensor (18, 19, 20) is a microphone, an incidence sensor or a sideslip sensor.

19. A device according to any one of Claims 11 to 18, **characterised in that** at least one sensor (18, 19, 20) is fixed to a fixed part of the said tail fin (9, 40, 50, 51).

20. A device according to any one of Claims 11 to 18, **characterised in that** at least one sensor (18, 19, 20) is fixed to a fixed part of the said tail assembly (39, 45).

21. A device according to any one of Claims 11 to 20, **characterised in that** it is implemented to control the incidence of at least one tail fin (40, 51) which is a trailing edge flap articulated to rotate respectively in relation to a fixed upstream tail fin (9', 50').

22. A device according to any one of Claims 12 to 21, **characterised in that** it is implemented to further control the incidence of at least one substantially horizontal tail assembly (45) which is a trailing edge flap articulated to rotate in relation to a fixed upstream tail assembly (39').

23. A device according to any one of Claims 11 to 22, which further has a lowpass filter whereof the cut-off frequency is in the order of 20 Hz to 30 Hz, and which is arranged to filter the said vibration measurements.

24. A device according to any one of Claims 11 to 23, in which the calculation means is arranged to select or adapt the phase offset between the vibrations measured and the gain in the control for varying the incidence of the tail fin.

**Patentansprüche**

1. Verfahren zur Reduzierung der an der Struktur (17) eines Hubschraubers (2) erzeugten Vibrationen, wobei der Hubschrauber mindestens eine ausrichtbare Heckflosse (9, 40, 50, 51), einen Rumpf (3), einen Haupt-Hub- und Vorschubrotor (5), ggf. einen Schwanzrotor (7) mit Blättern (8) aufweist, deren Blattverstellung veränderbar ist, wobei die Vibrationen durch die aerodynamische Strömung (A) durch den Hauptrotor und durch die aerodynamische Strömung (13) entlang des Rumpfes (3) erzeugt werden, bei dem:

> a) die erzeugten Vibrationen an mindestens einer Stelle der Struktur (17) des Hubschraubers (2) gemessen werden;

**dadurch gekennzeichnet, dass**

b) ausgehend von den Messungen eine Anstellwinkeländerung mindestens eines Teils der Heckflosse (9, 40, 50, 51) bestimmt wird, die eine Gegenkraft $(\overrightarrow{T1},\ \overrightarrow{T2})$ zu den Vibrationen erzeugen kann; und

c) die so bestimmte Anstellwinkeländerung an ein Anstellwinkel-Steuersystem (10) mindestens eines Teils der Heckflosse (9, 40, 50, 51) angewendet wird,

ohne alternative Änderung der Blattverstellung der Rotorblätter des Schwanzrotors.

**2.** Verfahren nach Anspruch 1, **dadurch gekennzeichnet, dass** die gemessenen Vibrationen frequenzgefiltert werden, und dass im Schritt b) nur die gefilterten Vibrationen berücksichtigt werden.

**3.** Verfahren nach einem der Ansprüche 1 oder 2, **dadurch gekennzeichnet, dass** die Amplitude der Gegenkraft $(\overrightarrow{T1},\ \overrightarrow{T2})$ auf einen vordefinierten Wert begrenzt ist.

**4.** Verfahren nach einem der vorhergehenden Ansprüche, **dadurch gekennzeichnet, dass** es nicht zur Reduzierung der Vibrationen angewendet wird, wenn der Hubschrauber (2) sich am Boden befindet.

**5.** Verfahren nach einem der vorhergehenden Ansprüche, **dadurch gekennzeichnet, dass** es nicht zur Reduzierung der Vibrationen angewendet wird, wenn der Hubschrauber (2) besonderen Flugbedingungen unterliegt.

**6.** Verfahren nach einem der vorhergehenden Ansprüche, angewendet bei einem Hubschrauber (2), dessen Heckflosse (9, 40, 51) parallel zur Symmetrieebene (P) des Hubschraubers liegt, **dadurch gekennzeichnet, dass**:

- im Schritt a) die erzeugten seitlichen Vibrationen an mindestens einer Stelle der Struktur (17) des Hubschraubers (2) gemessen werden;

- im Schritt b) eine seitliche Gegenkraft $(\overrightarrow{T1})$ zu den seitlichen Vibrationen erzeugt wird.

**7.** Verfahren nach einem der Ansprüche 1 bis 5, angewendet an einen Hubschrauber (2), dessen Heckflosse (9, 40, 50, 51) bezüglich der Symmetrieebene (P) des Hubschraubers geneigt ist, **dadurch gekennzeichnet, dass**:

- im Schritt a) die erzeugten seitlichen Vibrationen und die senkrechten Vibrationen an mindestens einer Stelle der Struktur (17) des Hubschraubers (2) gemessen werden; und

- im Schritt b) eine Gegenkraft $(\overrightarrow{T2})$ erzeugt wird, die eine seitliche Komponente $(\overrightarrow{TY2})$ und eine senkrechte Komponente $(\overrightarrow{TZ2})$ aufweist, die den seitlichen bzw. senkrechten Vibrationen entgegenwirken.

**8.** Verfahren nach einem der Ansprüche 1 bis 7, **dadurch gekennzeichnet, dass** zur Reduzierung der zusätzlichen senkrechten Vibrationen außerdem mit Hilfe mindestens eines Teils eines im Wesentlichen waagrechten Leitwerks (39, 45) mit ausrichtbarem Anstellwinkel eine senkrechte Gegenkraft $\overrightarrow{TZ}$ zu den zusätzlichen senkrechten Vibrationen erzeugt wird.

**9.** Verfahren nach einem der Ansprüche 1 bis 8, **dadurch gekennzeichnet, dass** es bei einem Hubschrauber (2) eingesetzt wird, dessen ausrichtbare Heckflosse (40, 51) eine Hinterkanten-Klappe ist, die bezüglich einer vorderen ortsfesten Heckflosse (9', 50') drehbar angelenkt ist.

**10.** Verfahren nach einem der Ansprüche 1 bis 9, **dadurch gekennzeichnet, dass** es bei einem Hubschrauber (2) angewendet wird, dessen ausrichtbares und im Wesentlichen waagrechtes Leitwerk (45) eine Hinterkanten-Klappe ist, die bezüglich eines vorderen ortsfesten Leitwerks (39') drehbar angelenkt ist.

**11.** Vorrichtung zur Reduzierung der an der Struktur (17) eines Hubschraubers (2) erzeugten Vibrationen, wobei der Hubschrauber eine Heckflosse (9, 40, 51), bei der der Anstellwinkel mindestens eines Teils von einem Steuersystem (10) gesteuert wird, einen Rumpf (3), einen Haupt-Hub- und Vorschubrotor (5), und ggf. einen Schwanzrotor (7) mit Blättern (8) aufweist, deren Blattverstellung veränderlich ist, wobei die Vibrationen durch die aerodynamische Strömung (A) durch den Hauptrotor und durch die aerodynamische Strömung (13) entlang des Rumpfes (3) erzeugt werden, wobei die Vorrichtung mindestens einen Sensor (18, 19, 20) aufweist, der in der Lage ist, die an der Struktur (17) des Hubschraubers (2) erzeugten Vibrationen zu messen, **dadurch gekennzeichnet, dass** sie eine Recheneinrichtung (30) aufweist, die ausgelegt (programmiert) ist, um:

- ausgehend von den Messungen eine Anstellwinkeländerung mindestens eines Teils der Heckflosse (9, 40, 50, 51) zu bestimmen, die eine Gegenkraft $(\overrightarrow{T1},\ \overrightarrow{T2})$ zu den Vibrationen erzeugen kann; und
- die so bestimmte Anstellwinkeländerung an das Anstellwinkel-Steuersystem (10) der Heckflosse (9, 40, 50, 51) zu übertragen, ohne eine alternative Änderung der Blattverstellung der Rotorblätter des Schwanzrotors zu steuern.

12. Vorrichtung nach Anspruch 11, **dadurch gekennzeichnet, dass** die Recheneinrichtung (30) zur Reduzierung der zusätzlichen senkrechten Vibrationen außerdem eine Anstellwinkeländerung an das Steuersystem (10) anwendet, um den Anstellwinkel mindestens eines Teils eines im Wesentlichen waagrechten Leitwerks (39, 45) zu steuern.

13. Vorrichtung nach Anspruch 11 oder 12, **dadurch gekennzeichnet, dass** der Sensor (18, 19, 20) ein Beschleunigungsmesser ist.

14. Vorrichtung nach Anspruch 11 oder 12, **dadurch gekennzeichnet, dass** der Sensor (18, 19, 20) ein Gyrometer ist.

15. Vorrichtung nach Anspruch 11 oder 12, **dadurch gekennzeichnet, dass** der Sensor (18, 19. 20) ein Spannungsmessgerät ist.

16. Vorrichtung nach einem der Ansprüche 11 bis 15, **dadurch gekennzeichnet, dass** sie außerdem eine Messeinrichtung für die Luftgeschwindigkeit (IAS) aufweist, und dass die Recheneinrichtung ausgelegt ist, um die Anstellwinkeländerung in Abhängigkeit von der Luftgeschwindigkeit zu bestimmen.

17. Vorrichtung nach Anspruch 16, **dadurch gekennzeichnet, dass** die Recheneinrichtung ausgelegt ist, um die Anstellwinkeländerung in Abhängigkeit vom Umkehrwert des Quadrats der Luftgeschwindigkeit zu berechnen.

18. Vorrichtung nach Anspruch 11, **dadurch gekennzeichnet, dass** der Sensor (18, 19, 20) ein Mikrophon, eine Anstellwinkelsonde oder eine Schiebewinkelsonde ist.

19. Vorrichtung nach einem der Ansprüche 11 bis 18, **dadurch gekennzeichnet, dass** mindestens ein Sensor (18, 19, 20) an einem ortsfesten Teil der Heckflosse (9, 40, 50, 51) befestigt ist.

20. Vorrichtung nach einem der Ansprüche 11 bis 18, **dadurch gekennzeichnet, dass** mindestens ein Sensor (18, 19, 20) an einem ortsfesten Teil des Leitwerks (39, 45) befestigt ist.

21. Vorrichtung nach einem der Ansprüche 11 bis 20, **dadurch gekennzeichnet, dass** sie eingesetzt wird, um den Anstellwinkel mindestens einer Heckflosse (40, 51) zu steuern, die eine Hinterkanten-Klappe ist, die bezüglich einer vorderen ortsfesten Heckflosse (9', 50') drehbar angelenkt ist.

22. Vorrichtung nach einem der Ansprüche 12 bis 21, **dadurch gekennzeichnet, dass** sie eingesetzt wird, um außerdem den Anstellwinkel mindestens eines im Wesentlichen waagrechten Leitwerks (45) zu steuern, das eine Hinterkanten-Klappe ist, die bezüglich eines vorderen ortsfesten Leitwerks (39') drehbar angelenkt ist.

23. Vorrichtung nach einem der Ansprüche 11 bis 22, die außerdem ein Tiefpassfilter aufweist, dessen Grenzfrequenz in der Größenordnung von 20 Hz bis 30 Hz liegt, das ausgelegt ist, um die Vibrationsrnessungen zu filtern.

24. Vorrichtung nach einem der Ansprüche 11 bis 23, bei der die Recheneinrichtung ausgelegt ist, um die Phasenverschiebung zwischen den gemessenen Vibrationen und der Verstärkung der Steuerung der Anstellwinkeländerung der Heckflosse zu wählen oder anzupassen.

Fig.1

Fig.2

Fig.3

Fig.4

Fig.5

Fig.6